# EUROPEAN PATENT APPLICATION

(11) **EP 2 514 806 A1**
(43) Date of publication of application: **24.10.2012**
(21) Application number: 12460010.7
(22) Date of filing: 27.03.2012
(51) Int. Cl.: C10L 5/44, C10L 5/46

(54) **The way of thermal utilization of mixture of dried sewage sediment with biomass through gasification**

(30) Priority: 28.03.2011 PL 39436111
(71) Applicant: Uniwersytet Technologiczni-Przyrodniczy Im. Jana I Jedrzeja Sniadeckich W Bydgoszcz, 85-225 Bydgoszcz (PL)
(72) Inventor: The designation of the inventor has not yet been filed
(74) Representative: Jankowski, Piotr

(57) **Abstract**

The way of thermal utilization of dried sewage sediment originated from dried sewage sediment and biomass through gassing the mixture of renewable fuel and dried sewage sediment and wood wastes, willow straw , and mallow characteristic of that dried sewage sediment constitutes from 1to 50 % and wastes 1 to 50% of mass.

## Description

The subject of the invention is the way of thermal utilization of mixture of dried sewage sediment originated from dried sewage sediments and biomass, through gasification which is the way of ecological usage of solar energy contained in plants in the process of coal accumulation in tissues. The way of gasification of biomass allows to complete fuel from wood, straw and energetic plants with dried sewage sediment.

Sewage sediment is a product of waste water treatment and originates from of a series of physical, physiochemical and biological processes occurring in waste water treatment plants. The known ways to settle in sewage sediments reduce predominantly to fertilization of arable soils, burning in fluidization incinerators and in the fermentation process to gain gas.

Burning of sediments is the most efficient method to settle it in if it conducted in a proper way. Sewage sediments intended for burning must not only be dehydrated but also exposed to drying process. Drying in high temperatures causes oxidization of a number of compounds and if does not occur in the same chamber where sediment is to be burnt then it requires the separate system of devices treating departure gases.

Known is the solution from patent description no 386600 concerning fuel biomass. Known are also patent descriptions no 381200- the way and equipment for generating energy through gasification rubbish, no 374847 saying about the way of biomass treatment and treatment of products produced because of its results, no 377486 about the way of rendering harmless wastes other than dangerous through low-temperature gasification and no 385987 - complex system of organic sewage sediments usage and also other biomass- particularly as renewable energy source.

The subject of solution according to invention is the way of thermal utilization of dried sewage sediment in the process of gasification it with biomass originated from straw, wood processing wastes and energetic plants in the of loose or pressed form which consists the mixture of renewable fuel with varying mass concentration so as to increase efficiency to use sewage sediment containing 90% of dry substance.

The way according to the invention proceeds as follows: in the loading chamber( of gasification), in the conditions of air deficit, with low temperature fuel consisting mixture of biomass and dried sewage sediment, where mass concentration of dried sewage sediment rating to total biomass content is 1 to 50% of fuel constituting mixture with biomass, is generated into flammable gas which next passes to burning/combustion chamber.

The way of thermal utilization of the mixture of dried sewage sediment with biomass was conducted in a low-temperature boiler with air heater. The inside of the boiler constitutes of loading chamber where a fuel mixture is placed. It is in the loose or pressed form depending on type and mass content. The value of heat for burning fuel is from 12MJ/kg to 15MJ/kg. In the chamber the fuel is burnt and gasified. Next the originated gas passed through a nozzle made of refractory concrete to burning chamber where it is burnt by using extra injection of air. The ventilator forces air through the elements of heater - double jacket and heat exchanger The blown out air can be carried away to heated rooms.

The temperature in the loading chamber during burning is from 300 C to 400 C but the temperature in the after-burning chamber is from 250 C to 650 C. The temperature of heated air carried out to heated rooms was from 56 C to 78 C

Gasification allows for more efficient ,than in the case of classic burning , utilization of a great range of wastes leading to the reduction of the waste mass in the scale of 70-80%

## Claims

1. The way of thermal utilization of mixture of dried sewage sediment originated from dried sewage sediments and biomass by/through gassing of the mixture of renewable fuel and dried sewage sediment and wood wastes, characteristic of that dried sewage sediment constitutes from 1 to 50%, and wood waste 1 to 50% of mass.

2. The way of thermal utilization of mixture of dried sewage sediment originated from dried sewage sediments and biomass through gassing of mixture renewable fuel and dried sewage sediment and straw characteristic that dried sewage sediment constitutes from 1 to 50% and straw 1 to 50% of mass

3. The way of thermal utilization of dried sewage sediment originated from dried sewage sediments and biomass through gassing the mixture of renewable fuel and dried sewage sediment and willow Salix viminalis characteristic of that/ dried sewage sediment constitutes from 1 to 50% and willow Salix viminalis 1 to 50% of mass.

4. The way of thermal utilization of dried sewage sediment originated from dried sewage sediment and biomass through gassing the mixture of renewable fuel and dried sewage sediment and willow of Pennsylvanian mallow Althaea characteristic of that dried sewage sediment constitutes from 1 to 50% and ..... 1 to 50% of mass.
